# EUROPÄISCHE PATENTSCHRIFT

(11) **EP 0 563 542 B1**
(45) Veröffentlichungstag und Bekanntmachung des Hinweises auf die Patenterteilung: **04.10.1995**
(21) Anmeldenummer: 93101878.2
(22) Anmeldetag: 06.02.1993
(51) Int. Cl.: B25B 31/00, F16B 21/16

(54) **Vorrichtung zum lösbaren Verbinden von Teilen**
Device for detachable connection of parts
Moyens pour connecter des pièces de façon détachable

(30) Priorität: 03.04.1992 DE 9204570 U
(43) Veröffentlichungstag der Anmeldung: 06.10.1993
(73) Patentinhaber: ERWIN HALDER KG, D-88480 Achstetten-Bronnen (DE)
(72) Erfinder: Halder, Werner, W-7959 Achstetten 3 - Bronnen (DE)
(74) Vertreter: Dziewior, Joachim, Dipl.-Phys. Dr.

(56) Entgegenhaltungen:
- FR-A- 2 580 743
- GB-A- 940 527
- US-A- 2 906 311
- US-A- 3 079 829
- US-A- 3 101 641

## Beschreibung

Die Erfindung betrifft eine Vorrichtung zum vorzugsweise lösbaren Verbinden von zwei oder mehreren, sich einander anliegenden Teilen, insbesondere Werkstücken, die mit jeweils wenigstens einer Bohrung zur gegenseitigen Ausrichtung in vorbestimmter Lage versehen sind, in welcher die Bohrungen zueinander fluchten, mit einem Kugelsteckbolzen, der mit einem durch die Bohrungen sich erstreckenden Spannbolzen versehen ist, an dessen freiem Ende wenigstens ein radial über dessen Mantelfläche vorverstellbares Sperrglied und an dessen axial anderem Ende ein eine axiale Anschlagfläche bildendes Anschlagteil vorgesehen sind, wobei das Anschlagteil über ein Schraubengewinde in axialer Richtung verstellbar mit den Spannbolzen verbunden ist und das Sperrglied über einen ebenfalls axial verschiebbaren, zur Seite des Anschlagteils hin vorstehenden Betätigungsstift auslösbar ist.

Derartige Kugelsteckbolzen sind in vielfältigen Ausführungsformen bekannt (vgl. z.B. US-A-3 101 641) und dienen dazu, entweder verschiedene Teile zu ihrer gemeinsamen Handhabung miteinander zu verbinden, oder aber auch dazu, ein Teil, beispielsweise ein Werkstück an einer Werkstückauflage zum Zwecke der Bearbeitung zu fixieren.

Um hierbei Teile mit unterschiedlicher Materialstärke durch jeweils den gleichen Kugelsteckbolzen befestigen zu können, um ferner nach der Befestigung das stets verbleibende axiale Spiel des eingesetzten Kugelsteckbolzens zu beseitigen, ist das Anschlagteil auf dem Spannbolzen über ein Gewinde axial verstellbar. Somit kann nach Einsetzen des Kugelsteckbolzens das Anschlagteil in Richtung zum Sperrglied hin verstellt werden, wodurch sich der lichte Abstand der beiderseitigen Anschläge verringert, also die durch den Kugelsteckbolzen zusammengehaltenen Teile gegenseitig fest zur Anlage gebracht werden.

Nachteilig ist hierbei allein, daß sich beim Verdrehen des Anschlagteils in der Regel der Spannbolzen mitdreht, so daß während des Anschraubens des Anschlagteils auf dieses eine oftmals nicht unbeträchtliche Zugkraft ausgeübt werden muß, um eine ausreichende Friktion zwischen dem Sperrglied und dem ihm anliegenden Teil zu erhalten.

Der Erfindung liegt die Aufgabe zugrunde, eine Vorrichtung der eingangs genannten Art so auszubilden, daß eine feste und spielfreie Verbindung der Teile auf einfache und schnell durchzuführende Weise erreicht wird.

Diese Aufgabe wird nach der Erfindung dadurch gelöst, daß an dem in Anlage mit dem Sperrglied kommenden Teil im Innenbereich seiner Bohrung oder im daran angrenzenden Randbereich wenigstens ein eine Drehsperre für den Spannbolzen bildender Vorsprung vorgesehen ist.

Der durch die Erfindung erreichte Vorteil besteht im wesentlichen darin, daß - je nach Drehlage des eingesetzten Kugelsteckbolzens - der Spannbolzen maximal eine volle Umdrehung beim Andrehen des Anschlagteils vollführen kann, da dann das Sperrglied an einer weiteren Drehung durch den Vorsprung gehindert ist.

Der Vorsprung kann in besonders einfacher Weise von einem aus der Oberfläche des Teils aufgestellten Span gebildet sein. Ebenso besteht jedoch auch die Möglichkeit, daß der Vorsprung von einer entweder in die Oberfläche des Teils oder in die Innenmantelfläche der Bohrung eingebrachten Vertiefung gebildet ist.

In einer weiteren, ebenfalls vorteilhaften Ausführungsform kann der Vorsprung auch an einem dem Teil reibschlüssig anliegenden, ebenfalls eine Bohrung für den Spannbolzen aufweisenden Sperrelement vorgesehen sein.

Schließlich besteht auch die Möglichkeit, daß der Vorsprung in einer Gewindehülse vorgesehen ist, die in das Teil eingeschraubt ist. Dies ist insbesondere dann von Vorteil, wenn das mit der Gewindehülse versehene Teil eine Werkstückauflage ist, also der regelmäßigen Spannung von Werkstücken dient. Dabei kann im Rahmen der Erfindung vorgesehen sein, daß das Gewinde sich über die gesamte zylindrische Außenmantelfläche der Gewindehülse erstreckt und daß stirnseitig zwei Betätigungsschlitze vorgesehen sind. Auf diese Weise kann die Gewindehülse in dem Teil vollständig versenkt werden, so daß sie nicht über die Oberfläche bzw. Spannfläche hervorsteht. Über die Betätigungsschlitze kann die Gewindehülse beispielsweise mit einer Schraubendreherklinge in das Teil eingesetzt werden.

Die Gewindehülse kann jedoch auch an ihrem stirnseitig einen Ende einen Sechskantflansch aufweisen, über den sie beispielsweise mittels eines Gabelschlüssels eingeschraubt werden kann. Diese Lösung bietet sich an, wenn zumindest auf der einen Seite des Teils der über die Oberfläche hervorstehende Sechskantflansch nicht stört.

Hierbei kann der Vorsprung von einer Axialnut in der Innenwand der Gewindehülse gebildet sein. In diesem Fall ist es günstig, wenn die Vorsprünge in Anzahl und gegenseitiger Ausrichtung den Sperrgliedern angepaßt sind.

Um ein noch schnelleres Wirksamwerden der Sperre zu erreichen, können nach der Erfindung bei einem Spannbolzen mit zwei diametral zueinander angeordneten Sperrgliedern auch zwei Vorsprünge vorgesehen sein, die axial unter einem Winkel von 90° oder diametral zueinander angeordnet sind.

Im folgenden wird die Erfindung an einem in der Zeichnung dargestellten Ausführungsbeispiel näher erläutert; es zeigen:
- Fig. 1: einen Querschnitt durch die Vorrichtung nach der Erfindung, dargestellt in ver- und entriegelter Stellung des Sperrglieds,
- Fig. 2: eine Ansicht des Gegenstands nach Fig. 1 in Richtung II,
- Fig. 3: eine Gewindehülse als Gegenstück für den Gegenstand nach Fig. 1, in der Teilfigur a) als Draufsicht und in der Teilfigur b) als Axialschnitt dargestellt,
- Fig. 4: eine andere Ausführungsform des Gegenstands nach Fig. 3.

Die in der Zeichnung dargestellte Vorrichtung dient vorzugsweise zum lösbaren Verbinden von zwei oder mehreren Teilen 1, 2, insbesondere von Werkstücken, die sich plan einander anliegen sollen. Dies kann beispielsweise zur gemeinsamen Handhabung der Teile 1, 2 oder auch für die Bearbeitung eines Teils 2 erforderlich sein, das dazu an eine Werkstückauflage 1 angeschlossen werden soll.

Die Teile 1, 2 sind dazu mit jeweils wenigstens einer Bohrung 3 in vorbestimmter Lage versehen, die so gewählt ist, daß die Bohrungen 3 bei der beabsichtigten gegenseitigen Ausrichtung zueinander fluchten.

In diese Bohrungen 3 ist ein Kugelsteckbolzen einsetzbar, der mit einem durch die Bohrungen 3 sich erstreckenden Spannbolzen 4 versehen ist. Am freien Ende des Spannbolzens 4 sind im Ausführungsbeispiel zwei radial über dessen Mantelfläche vorverstellbare Sperrglieder 5 vorgesehen. Am axial anderen Ende des Spannbolzen 4 ist ein eine axiale Anschlagfläche 6.1 bildendes Anschlagteil 6 angeordnet, wobei das Anschlagteil 6 über ein Schraubengewinde 7 in axialer Richtung verstellbar am Spannbolzen 4 angeschlossen ist.

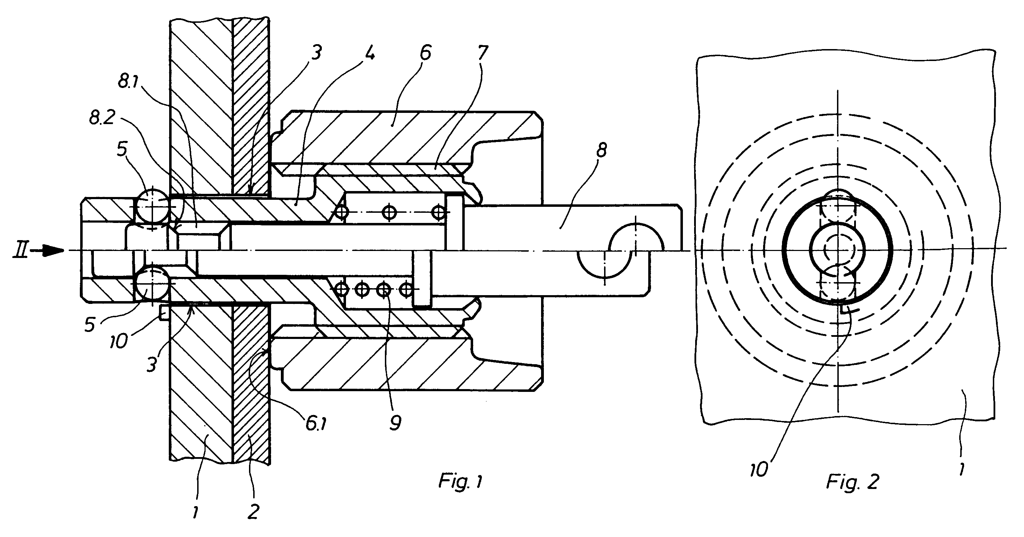

Die Sperrglieder 5 sind über einen ebenfalls axial verschiebbaren Betätigungsstift 8 auslösbar, der zur Seite des Anschlagteils 6 hin vorsteht. Im einzelnen bestehen die Sperrglieder 5 aus Kugeln, die in eine am Betätigungsstift 8 vorgesehene Ringnut 8.1 vorstehen, wobei zumindest die eine Nutwand 8.2 eine konische Fläche bildet, die der radialen Verstellung der Kugeln dient. Der Betätigungsstift 8 wird durch eine Schraubenfeder 9 in der in Fig. 1 in der oberen Hälfte dargestellten Lage gehalten, wodurch sich die Sperrglieder in ihrer Verriegelungsstellung befinden.

Um ein Mitdrehen des Spannbolzens 4 zu verhindern, wenn das Anschlagteil 6 über das Schraubengewinde 7 in Richtung zu den Sperrgliedern 5 verstellt wird, weist das in Anlage mit dem Sperrglied 5 kommende Teil 1 außenseitig am Rand seiner Bohrung 3 einen Vorsprung 10 auf, der eine Drehsperre für den Spannbolzen 4 bildet. Dieser Vorsprung 10 ist in besonders einfacher Ausgestaltung von einem aus der Oberfläche des Teils 1 aufgestellten Span gebildet. Ebenso kann der Vorsprung 10 jedoch auch von einer in die Oberfläche des Teils 1 eingedrückten Vertiefung gebildet sein.

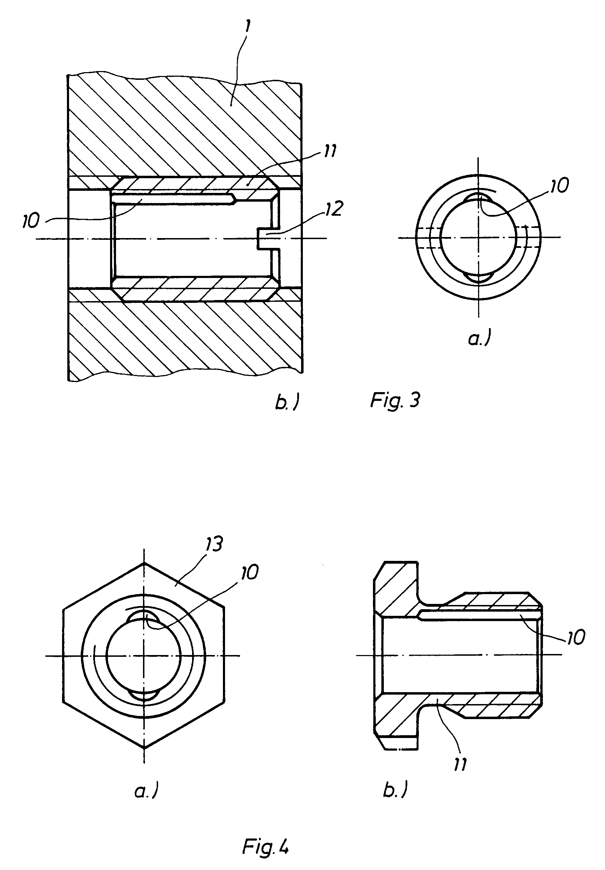

In den Fig. 3 und 4 ist jeweils eine Gewindehülse 11 dargestellt, die in das Teil 1 als mit dem Vorsprung 10 versehenes Gegenstück für den Betätigungsstift 8 eingeschraubt sein kann.

In dem Ausführungsbeispiel nach Fig. 3 erstreckt sich das Gewinde über die gesamte zylindrische Außenmantelfläche der Gewindehülse 11. Auf diese Weise besteht die Möglichkeit, die Gewindehülse 11 vollständig in das Teil 1 einzuschrauben, so daß die Gewindehülse 11 über dessen Oberfläche nicht hervorsteht. Um das Einschrauben zu erleichtern, sind stirnseitig zwei Betätigungsschlitze 12 vorgesehen, durch die das Einschrauben durch eine Schraubendreherklinge erleichtert wird.

Die Gewindehülse 11 kann jedoch gemäß Fig. 4 an ihrem stirnseitig einen Ende auch einen Sechskantflansch 13 aufweisen, der ein Eindrehen der Gewindehülse 11 mittels eines Gabelschlüssels oder dergl. ermöglicht.

Der Vorsprung 10 ist hierbei jeweils von einer Axialnut in der Innenwand der Gewindehülse 11 gebildet. Dabei sind die Vorsprünge 10 in Anzahl und gegenseitiger Ausrichtung den Sperrgliedern 5 angepaßt.

Schließlich besteht noch die in der Zeichnung ebenfalls nicht dargestellte Möglichkeit, daß der Vorsprung 10 an einem dem Teil 1 reibschlüssig anliegenden, ebenfalls eine Bohrung aufweisenden Sperrelement ausgebildet ist.

Um ein möglichst schnelles Wirksamwerden der Drehsperre zu erreichen, können bei einem Spannbolzen 4 mit zwei diametral zueiannder angeordneten Sperrgliedern 5 zwei Vorsprünge 10 vorgesehen sein, die axial unter einem Winkel von 90° oder auch diametral zueinander angeordnet sind.

## Patentansprüche

1. Vorrichtung zum vorzugsweise lösbaren Verbinden von zwei oder mehreren, sich einander anliegenden Teilen (1, 2), insbesondere Werkstücken, die mit jeweils wenigstens einer Bohrung (3) zur gegenseitigen Ausrichtung in vorbestimmter Lage versehen sind, in welcher die Bohrungen zueinander fluchten, mit einem Kugelsteckbolzen, der mit einem durch die Bohrungen sich erstreckenden Spannbolzen (4) versehen ist, an dessen freiem Ende wenigstens ein radial über dessen Mantelfläche vorverstellbares Sperrglied (5) und an dessen axial anderem Ende ein eine axiale Anschlagfläche (6.1) bildendes Anschlagteil (6) vorgesehen sind, wobei das Anschlagteil über ein Schraubengewinde (7) in axialer Richtung verstellbar mit dem Spannbolzen (4) verbunden ist und das Sperrglied (5) über einen ebenfalls axial verschiebbaren, zur Seite des Anschlagteils hin vorstehenden Betätigungsstift (8) auslösbar ist, dadurch gekennzeichnet, daß an dem in Anlage mit dem Sperrglied (5) kommenden Teil (1) im Innenbereich seiner Bohrung (3) oder im daran angrenzenden Randbereich wenigstens ein eine Drehsperre für den Spannbolzen (4) bildender Vorsprung (10) vorgesehen ist.

2. Vorrichtung nach Anspruch 1, dadurch gekennzeichnet, daß der Vorsprung (10) von einem aus der Oberfläche des Teils (1) aufgestellten Span gebildet ist.

3. Vorrichtung nach Anspruch 1, dadurch gekennzeichnet, daß der Vorsprung (10) von einer entweder in die Oberfläche des Teils (1) oder in die Innenmantelfläche der Bohrung (3) eingebrachten Vertiefung gebildet ist.

4. Vorrichtung nach Anspruch 1, dadurch gekennzeichnet, daß der Vorsprung (10) an einem dem Teil (1) reibschlüssig anliegenden, ebenfalls eine Bohrung für den Spannbolzen (4) aufweisenden Sperrelement vorgesehen ist.

5. Vorrichtung nach Anspruch 1, dadurch gekennzeichnet, daß der Vorsprung (10) in einer Gewindehülse (11) vorgesehen ist, die in das Teil (1) eingeschraubt ist.

6. Vorrichtung nach Anspruch 5, dadurch gekennzeichnet, daß das Gewinde sich über die gesamte zylindrische Außenmantelfläche der Gewindehülse (11) erstreckt und daß stirnseitig zwei Betätigungsschlitze (12) vorgesehen sind.

7. Vorrichtung nach Anspruch 5, dadurch gekennzeichnet, daß die Gewindehülse (11) an ihrem stirnseitig einen Ende einen Sechskantflansch (13) aufweist.

8. Vorrichtung nach einem der Ansprüche 5 bis 7, dadurch gekennzeichnet, daß der Vorsprung (10) von einer axialen Nut in der Innenwand der Gewindehülse (11) gebildet ist.

9. Vorrichtung nach Anspruch 8, dadurch gekennzeichnet, daß die Vorsprünge (10) in Anzahl und gegenseitiger Ausrichtung den Sperrgliedern (5) angepaßt sind.

10. Vorrichtung nach einem der Ansprüche 1 bis 8, dadurch gekennzeichnet, daß bei einem Spannbolzen (4) mit zwei diametral zueinander angeordneten Sperrgliedern (5) zwei Vorsprünge (10) vorgesehen sind, die axial unter einem Winkel von 90° oder diametral zueinander angeordnet sind.

## Claims

1. A device for preferably releasably connecting two or more members (1, 2), in particular workpieces, which bear against each other and which are each provided with at least one bore (3) for mutual orientation in a predetermined position in which the bores are aligned with each other, having a ball-type fixing pin provided with a cling pin (4) which extends through the bores and at the free end of which is provided at least one locking member (5) which can be radially advanced beyond the peripheral surface thereof, and at the axially other end of which is provided an abutment member (6) forming an axial abutment surface (6.1), wherein the abutment member is connected to the clamping pin (4) adjustably in the axial direction by way of a screwthread (7) and the locking member (5) can be brought into operation by way of an actuating pin member (8) which is also axially displaceable and which projects towards the side of the abutment member, characterised in that provided on the member (1) which comes into contact with the locking member (5), in the inner region of its bore (3) or in the edge region adjoining same, is at least one projection (10) forming a rotational locking means for the clamping pin (4).

2. A device according to claim 1 characterised in that the projection (10) is formed by a chip which is caused to stand up out of the surface of the member (1).

3. A device according to claim 1 characterised in that the projection (10) is formed by a depression which is produced either in the surface of the member (1) or in the inside peripheral surface of the bore (3).

4. A device according to claim 1 characterised in that the projection (10) is provided on a locking element which bears in frictional contact against the member (1) and which also has a bore for the clamping pin (4).

5. A device according to claim 1 characterised in that the projection (10) is provided in a threaded sleeve (11) which is screwed into the member (1).

6. A device according to claim 5 characterised in that the thread extends over the entire cylindrical outside peripheral surface of the threaded sleeve (11) and that two actuating slots (12) are provided at the end.

7. A device according to claim 5 characterised in that the threaded sleeve (11) has a hexagonal flange (13) at its one end.

8. A device according to one of claims 5 to 7 characterised in that the projection (10) is formed by an axial groove in the inside wall of the threaded sleeve (11).

9. A device according to claim 8 characterised in that the projections (10) are matched in respect of number and mutual orientation to the locking members (5).

10. A device according to one of claims 1 to 8 characterised in that, in the case of a clamping pin (4) having two locking members (5) which are arranged in diametral relationship with each other, there are provided two projections (10) which are arranged axially at an angle of 90° or diametrally relative to each other.

## Revendications

1. Dispositif pour connecter de préférence de façon détachable deux ou plusieurs pièces (1,2) en contact les unes avec les autres, en particulier des pièces à usiner dont chacune est pourvue d'au moins un alésage (3) pour l'ajustement réciproque dans une position prédéterminée dans laquelle les alésages sont alignés, avec un axe à billes débrochable, pourvu d'un écrou de serrage (4) s'étendant à travers les alésages, sur l'extrémité libre duquel est prévu au moins un élément d'arrêt (5) préréglable au-dessus de sa surface latérale, et sur l'autre extrémité axiale duquel est prévu un élément d'arrêt (6) formant une surface d'arrêt (6.1), l'élément d'arrêt étant connecté avec l'élément de serrage (4) de façon règlable dans une direction axiale, par l'intermédiaire d'un filetage de vis (7), et l'élément d'arrêt (5) pouvant être libéré par une broche d'actionnement (8) également réglable axialement, dépassant en direction du côté de l'élément d'arrêt, caractérisé en ce qu'au moins un ergot (10) formant un arrêt en rotation pour l'écrou de serrage (4) est prévu sur la pièce (1) venant en contact avec l'élément d'arrêt (5) dans la zone interne de son alésage (3) ou dans la zone de bordure adjacente.

2. Dispositif selon la revendication 1, caractérisé en ce que l'ergot (10) est constitué par un copeau relevé à partir de la surface supérieure de la pièce (1).

3. Dispositif selon la revendication 1, caractérisé en ce que l'ergot (10) est formé par un creux aménagé dans la surface supérieure de la pièce (1) ou dans la surface de paroi intérieure de l'alésage (3).

4. Dispositif selon la revendication 1, caractérisé en ce que l'ergot (10) est prévu sur un élément d'arrêt entraîné par friction par la pièce (1), et comportant également un alésage pour le boulon de serrage (4).

5. Dispositif selon la revendication 1, caractérisé en ce que l'ergot (10) est prévu dans une douille filetée (11) qui est vissée dans la pièce (1).

6. Dispositif selon la revendication 5, caractérisé en ce que le filetage s'étend sur toute la surface de paroi cylindrique extérieure de la douille filetée (11), et en ce que deux fentes d'actionnement (12) sont prévues sur la face frontale.

7. Dispositif selon la revendication 5, caractérisé en ce que la douille filetée (11) comporte à son extrémité frontale une bride hexagonale (13).

8. Dispositif selon l'une des revendications 5 à 7, caractérisé en ce que l'ergot (10) est formé par une rainure axiale dans la paroi interne de la douille filetée (11).

9. Dispositif selon la revendication 8, caractérisé en ce que les ergots (10) sont adaptés par leur nombre et leur disposition réciproque aux éléments de d'arrêt (5).

10. Dispositif selon l'une des revendications 1 à 8, caractérisé en ce qu'avec un écrou de serrage (4) pourvu de deux éléments d'arrêt (5) disposés de façon diamétralement opposée, sont prévus deux ergots (10) disposés axialement à un angle de 90° ou diamétralement opposés l'un par rapport a l'autre.
